Europäisches Patentamt

**European Patent Office**

Office européen des brevets

(11) Publication number: **0 244 334 B1**

## EUROPEAN PATENT SPECIFICATION

(45) Date of publication of patent specification: **28.08.91**

(51) Int. Cl.⁵: **B64C 23/00, B63H 9/06, F01D 5/14, B64C 21/10**

(21) Application number: **87630050.0**

(22) Date of filing: **07.04.87**

(54) Airfoil-shaped body.

(30) Priority: **30.04.86 US 857907**

(43) Date of publication of application:
**04.11.87 Bulletin 87/45**

(45) Publication of the grant of the patent:
**28.08.91 Bulletin 91/35**

(84) Designated Contracting States:
**DE FR GB IT**

(56) References cited:
**FR-A- 1 134 736**
**GB-A- 377 804**
**US-A- 1 712 119**
**US-A- 1 864 964**

(73) Proprietor: **UNITED TECHNOLOGIES CORPO-RATION**
**United Technologies Building 1, Financial Plaza**
**Hartford, CT 06101(US)**

(72) Inventor: **Presz, Walter M., Jr.**
**40 Grove St.**
**Wilbraham Massachusetts 01095(US)**
Inventor: **Paterson, Robert W.**
**4 Pinecrest Drive**
**Simsbury Connecticut 06117(US)**
Inventor: **Werle, Michael R.**
**4 Porter Drive**
**West Hartford Connecticut 06117(US)**

(74) Representative: **Weydert, Robert et al**
**OFFICE DENNEMEYER S.à.r.l. P.O. Box 1502**
**L-1015 Luxembourg(LU)**

Rank Xerox (UK) Business Services

## Description

The present invention relates to airfoil-shaped bodies.

Drag is the result of skin friction and surface pressure variations induced by viscous effects, especially those due to separation bubbles or regions (i.e., low pressure wakes). Separation regions occur when two and three dimensional boundary layers depart from the surface of the body. Bluff or blunt bodies have shapes which tend to promote a rapidly increasing downstream pressure gradient in the streamline flow around it which can cause the bulk flow to break loose from the surface of the body. Airfoil shaped bodies such as airplane wings, rudders, sails, and gas turbine engine rotor blades and stator vanes have a streamlined shape which, at moderate angles of attack (below about 15°) avoid streamwise two-dimensional boundary layer separation over the entire surface. At higher angles of attack (or increased loading) separation does occur and a recirculating flow region (or a low pressure wake) is formed, greatly increasing drag and reducing lift. As used in the specification and appended claims, "streamwise, two-dimensional boundary layer separation" means the breaking loose of the bulk fluid from the surface of a body, resulting in flow near the wall moving in a direction opposite the bulk fluid flow direction.

It has been a constant goal of aerodynamicists to reduce the drag and improve lift and stall characteristics on bodies disposed in a fluid moving relative thereto. A common way to avoid boundary layer separation on an airfoil (or other streamlined body) or to at least delay separation such that it occurs as far downstream along the surface of the airfoil as possible so as to minimize drag, is to reduce the pressure rise downstream such as by tailoring the surface contour along the length of the airfoil in the direction of bulk fluid flow.

Another well known method for reducing the drag on airfoils is to create turbulence in the boundary layer so as to impart a greater average momentum of the boundary layer fluid, which carries it further downstream along the surface against an adverse pressure gradient, thereby delaying the separation point. One technique for increasing the momentum of the boundary layer is to generate streamwise vortices such as by using the ramp-type vortex generators shown in US-A-2,800,291.

In US-A-4,455,045 elongated, expanding channels are formed in the flow surface. The channels have sharp, lengthwise edges. The boundary layer on the surface flows into the channels, and the channel edges create streamwise vortices below the level of the normal flow surface which energize the flow in the channel to maintain boundary layer attachment of the flow along the floor of the channel.

In US-A-1,773,280, increased lift without increased drag is created for an aircraft wing by placing a plurality of side by side chordwise extending ridges along the top of the wing from its leading to its trailing edge, the ridges having their highest point near the thickest portion of the wing. The ridges themselves are airfoil shaped when viewed from above, tapering to a point at the trailing edge of the wing. This concept does not take into account viscous induced boundary layer separation effects and therefore could not be expected to avoid separation at high lift conditions.

In US-A-3,588,005 chordwise extending ridges are formed in the upper surface of an airfoil to delay the onset of separation by providing "channels of accelerated flow in the free stream flow direction to add energy to the boundary layer and maintain laminar flow in the region of normally adverse pressure gradient." The ridges protrude from the surfaces "to a height of the order of the boundary layer thickness". Cross flow components "are accelerated over the ridges and may reduce the likelihood of separation near the aft end...of the body by allowing the flow to 'corkscrew' smoothly off the aft end rather than encounter the abrupt adverse pressure gradient in the free stream direction caused by a blunted aft end." As with the ridges of US-A-1,773,280 discussed above, flow is also accelerated between the ridges which further helps maintain laminar flow over the airfoil surface.

In US-A-3,741,235 and 3,578,264 separation by creating vortices is delayed using a series of crests or concave depressions which extend substantially transverse to the streamwise flow direction. It is stated that the maximum height of a crest or depth of a depression is preferably less than the boundary layer thickness.

In a paper titled "The Reduction of Drag by Corrugating Trailing Edges" by D. L. Whitehead, M. Kodz, and P. M. Hield published by Cambridge University, England in 1982, which discloses an airfoil-shaped body according to the precharacterizing portion of claim 1 blunt base drag of a blade [having a 508 mm (20-inch span), 508 mm (20 inch) chord length, a constant thickness of 38 mm (1.5 inches) and a blunt trailing edge] is reduced by forming the last 177 mm (seven inches) of its chordwise length into streamwise extending, alternating troughs and ridges (corrugations). The trailing edge and any upstream cross-section across the corrugations has the shape of a sine wave with an 203 mm (8.0 inch) wavelength. The thickness of the blade material is maintained constant over the length of each trough and ridge, although the trough depth or ridge height (i.e., wave amplitude) transitions from a maximum of 50.8 mm (2.0 inches) at the trailing edge to zero upstream. Figs. 14-16 show the blade described therein, with dimensions given in terms of a unit length "a". A reduction of base drag of about one-third was realized when compared with a reference blade without corrugation. It is explained that spanwise vortices which were shed alternately from the top and bottom rear edges of the non-corrugated reference blade were eliminated by the corrugations. No mention is made in the paper of surface separation.

Similar airfoil-shaped bodies are disclosed in FR-A-1,134,736 and GB-A-377 804. Again no mention is made in these prior art publications of surface separation.

In general, it is believed that the separation delaying devices of the prior art create significant drag in their own right, thereby negating some of the benefits they would otherwise provide. This sometimes limits their effectiveness. While many of the devices of the prior art have proved to be effective in reducing drag and/or in permitting somewhat higher angles of attack before the onset of stall, further improvement is still desired. Even an additional reduction in drag of only 1 %, or enabling an airfoil to operate without stalling at a relatively small increased angle of attack is considered valuable; yet, additional improvements of even small magnitude have been found to be very difficult to attain considering the present highly developed state of the art.

The object of the invention is to reduce the drag on airfoil shaped bodies at high loading, to reduce the sensitivity of an airfoil-shaped body to stall onset under various operating conditions, and to provide an airfoil shaped body which can be operated at a higher angle of attack than conventional airfoils, without the occurrence of stall.

According to the invention, to achieve this, there is provided an airfoil shaped body having a thin trailing edge, a trailing edge region, and a pressure and a suction surface terminating at said trailing edge, and adapted to be disposed in a fluid moving downstream relative thereto at a selected operating angle of attack A which would normally result in flow separation from said suction surface, means for preventing or delaying such flow separation from occurring on said suction surface at such selected angle of attack comprising a plurality of alternating, adjacent troughs and ridges in said suction surface extending to said trailing edge generally along streamlines of the bulk fluid flow adjacent to the suction surface, said troughs and ridges in said suction surface forming, respectively, ridges and troughs in said pressure surface at least in said trailing edge region and said trailing edge being wave shaped, said troughs and ridges being generally "U"-shaped in cross section perpendicular to their length and blending smoothly with each other, the peak-to-peak wave amplitude M of said troughs and ridges increasing from zero at their upstream ends to maximum amplitude at the trailing edge, characterized in that said troughs and ridges initiate at a point upstream of any boundary layer separation and the troughs and ridges are contoured and sized along the length thereof such that streamwise two-dimensional boundary layer separation on the surface of the troughs and ridges is eliminated over substantially the full length of the troughs and ridges at said selected operating angle, that said maximum amplitude at said trailing edge is at least about twice and preferably at least about four times the 99 % boundary layer thickness measured immediately upstream of said troughs, and that at the trailing edge the distance W between adjacent ridge peaks is between 0.5 and 4.0 times M.

It is believed that the trough and ridge construction delays or prevents the catastrophic effects of two-dimensional boundary layer separation by providing three-dimensional relief for the low momentum boundary layer flow. The local flow area variations created by the troughs and ridges produce local control of pressure gradients and allow the boundary layer approaching an adverse pressure gradient region to move laterally instead of separating from the wall surface. It is believed that as the boundary layer flows downstream and encounters a ridge, it thins out along the top of the ridge and picks up lateral momentum on either side of the peak of the ridge toward the troughs. In corresponding fashion, the boundary layer flowing into the trough is able to pick up lateral momentum and move laterally on the walls of the trough on either side thereof. The net result is the elimination of two-dimensional boundary layer separation because the boundary layer is able to run around the pressure rise as it moves toward the trailing edge. The entire scale of the mechanism is believed to be inviscid in nature and not tied directly to the scale of the boundary layer itself.

It is believed that best results are obtained when peak to peak amplitude at the trailing edge is comparable to the thickness of the separation bubble (or wake) which would be expected to occur at the trailing edge at a selected angle of attack for which the airfoil is designed, if the airfoil did not incorporate the troughs and ridges. This will generally result in trough depth and ridge heights many times larger (often orders of magnitude larger) than the boundary layer thickness.

To prevent or at least delay streamwise two-dimensional boundary layer separation from occuring on the suction surface of an airfoil, which is the surface which typically has the separation problem due to its having a greater trailing edge region adverse pressure gradient then the pressure surface, the troughs and ridges must start upstream of where separation would otherwise be likely to occur at the angle of attack for which the airfoil is to operate. The trough depth and ridge height start at zero and increase toward the trailing edge to respective maximum dimensions.

In US-A-3,588,005 already referred to only ridges are provided having a maximum height which is only approximately the laminar boundary layer thickness. The US-A-3,588,005 mechanism involves lateral flow of the laminar boundary layers over the ridges themselves, i.e. it involves energizing laminar boundary layer only by local acceleration of that boundary layer as it proceeds over the top of the ridges. Note that in US-A-3,588,005 it is indicated that the mechanism will work with ridges oriented normal to the streamwise flow direction, further indicating that the mechanism involved therein is the energizing of the boundary layer by having it flow over the ridges. This is similar in nature to the device described in US-A-3,578,264 wherein crests or depressions which are only the height of the boundary layer are oriented generally normal to the flow and simply energize the boundary layer by creating vortices which transfer their energy to the boundary layer. Other types of vortex generators which are well known in the prior art operate on the principal of transferring energy from the free stream into the frictionally decelerated boundary layer, thereby providing energy to aid the flow in overcoming the adverse pressure gradient. Unfortunately, vortex generators of the type which protrude into the fluid stream create their own drag which detracts from their effectiveness. Thus, while such vortex generators may create axial vortices in the boundary layer and delay or eliminate separation and may increase lift, they simultaneously create an undesirable drag penalty of their own which offsets some of their benefits.

The primary effect of the present invention is to provide a path for the boundary layer to skirt around the adverse pressure gradient itself. It does not require an identifiable vortex structure in the trough or on the ridges of the body. Neither does it require net flow over the ridges. As such the present invention is useful in preventing boundary layer separation for either turbulent or laminar flows.

The foregoing and other features and advantages of the airfoil shaped body will become more apparent in the light of the following detailed description of preferred embodiments thereof as illustrated in the accompanying drawing, wherein:

Fig. 1 is a prior art airfoil which is shown for the purpose of defining and explaining terms used in the application.

Fig. 2 is an illustrative, perspective view of an airfoil incorporating the present invention.

Fig. 2A is a view representing a cross section of the airfoil of Fig. 2, but without the troughs and ridges formed therein.

Fig. 3 is a sectional view taken along the line 3-3 of Fig. 2.

Fig. 4 is a sectional view taken along the line 4-4 of Fig. 2.

Fig. 5a is an end view of the airfoil of Fig. 2 generally in the direction of the line 5a-5a of Fig. 3.

Fig. 5b is a sectional view of the airfoil of Fig. 2 taken along the line 5b-5b of Fig. 3.

Fig. 6 is a graph including a lift coefficient curve for an airfoil similar to the one shown in Fig. 2, for various angles of attack, including a similar curve for the same airfoil without the present invention, for purposes of comparison.

Fig. 7 is a graph showing the relationship between the coefficient of lift and coefficient of drag for an airfoil similar to the airfoil shown in Fig. 2, including a curve showing such a relationship for the same airfoil without the present invention, for purposes of comparison.

Fig. 8 is a schematic representation of a gas turbine engine incorporating stator vanes and rotor blades constructed in accordance with the teachings of the present invention.

Fig. 9 is an enlarged view of the stator vane shown in Fig. 8.

Fig. 10 is an enlarged view of the rotor blade shown in Fig. 8.

Fig. 11 is a simplified, illustrative perspective view of a sailboat having a sail, keel, and rudder all incorporating the features of the present invention.

Fig. 12 is a view of the trailing edge of the sail of Fig. 11 taken generally in the direction 12-12 of Fig. 11.

Fig. 13 is a view of the suction surface of the wing of Fig. 2, taken along the line 13-13 of Fig. 3.

Fig. 14 is a perspective view of a "blade" in accordance with the prior art.

Fig. 15 is a cross-sectional view taken along the line 16-16 of prior art Fig. 15.

Fig. 16 is a cross-sectional view taken along the line 17-17 of prior art Fig. 15.

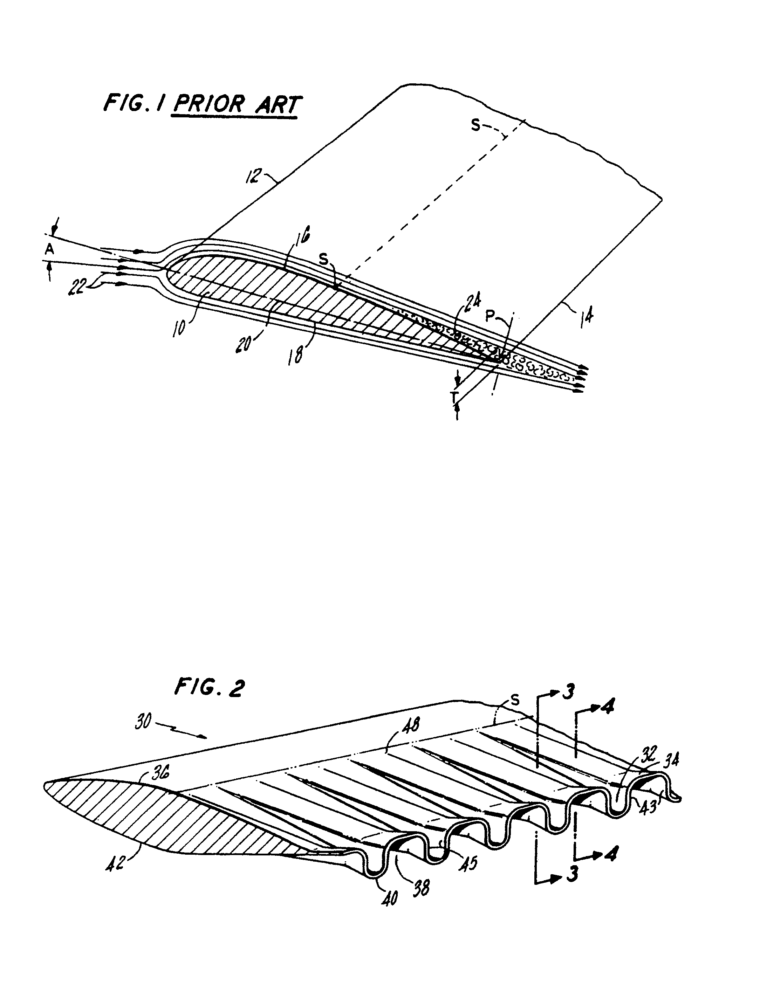

Fig. 1 is illustrative of the flow field around an airfoil shaped body 10 of the prior art which is oriented at an angle of attack great enough to result in two-dimensional boundary layer separation from the surface of the airfoil. For purposes of understanding the terminology used throughout the present specification, the airfoil shaped body 10 includes a leading edge 12, a thin trailing edge 14, a suction surface 16, and a pressure surface 18. The airfoil cross section has a mean chord line 20. Fluid stream lines are represented by the reference numeral 22 and show the direction of bulk fluid flow relative to the surface of the body 10. The angle of attack of the body is designated by the reference letter A.

As used throughout this specification and claims, the phrase "airfoil shaped body" means a body which is considered to have an airfoil shape in cross section (i.e. a generally streamlined cross sectional shape). An airfoil shaped body having a "thin trailing edge" is a body whose trailing edge is so thin it does not, in and of itself, create significant base drag.

In the illustration of Fig. 1, the angle of attack is such as to produce high loading and cause the fluid stream lines to separate from the suction surface 16 at a point S at the cross section shown. The points S taken along a series of cross sections define a separation line S' along the suction surface of the airfoil. A separation region (or wake 24) is created downstream of the separation line S' which creates drag on the airfoil. The further upstream the separation line is located, the greater the drag on the airfoil and the lower the lift. For purposes which will become clear hereinafter, the thickness T of a separation region (or wake) is defined as the distance from the trailing edge to the outer edge of the separation region as measured in a plane P passing through the trailing edge and perpendicular to the airfoil mean chord line at the trailing edge.

With reference to Figs. 2-5, a wing 30 has an airfoil shaped cross section. In this embodiment the wing 30 has a plurality of alternating troughs 32 and ridges 34 in the upper suction surface 36; and a plurality of alternating troughs 38 and ridges 40 in its lower pressure surface 42. Each trough 32, 38 has a pair of opposed sidewalls 43, 45, respectively. The troughs 32, 38 and the ridges 34, 40 extend generally along the expected streamlines of the bulk fluid flow over the wing in the vicinity of each ridge and trough.

Fig. 2A, shows what the airfoil cross section would be without the troughs and ridges. This is hereafter referred to as the "nominal" airfoil cross section. Assuming the wing 30 had a constant cross section identical to the nominal cross section, a separation line S' for any preselected angle of attack may be determined. To avoid separation, the upstream ends of the troughs 32 and ridges 34 must necessarily be located upstream of this separation line for that angle of attack. Such troughs and ridges then extend to the trailing edge of the airfoil.

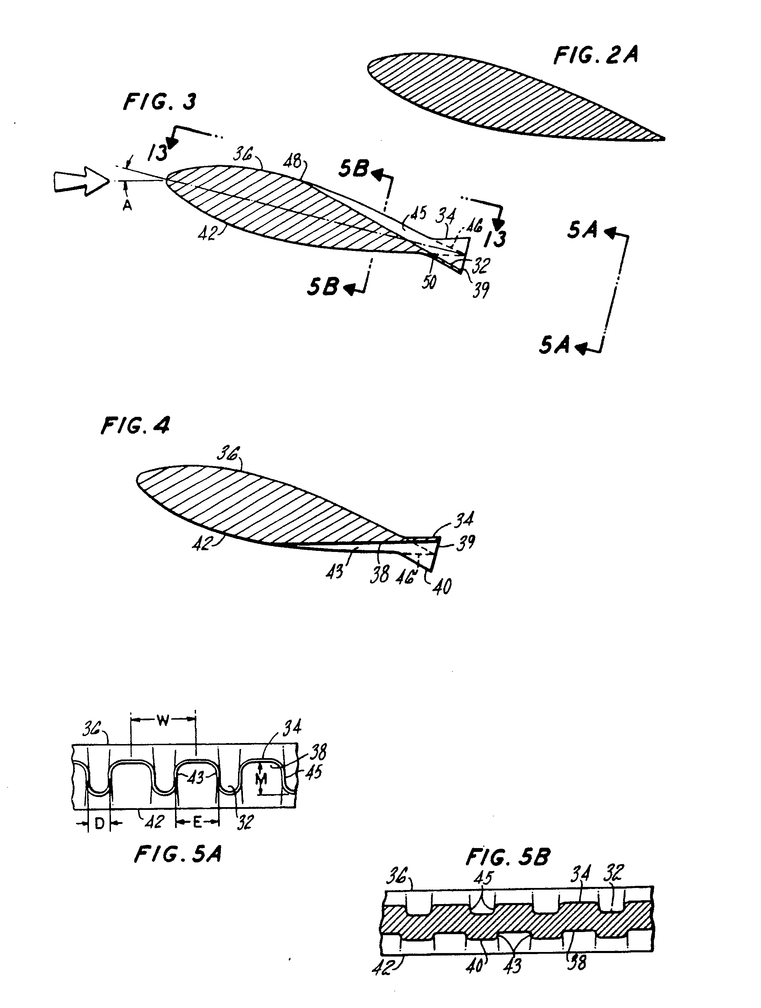

If boundary layer separation is not a problem on the pressure surface of the airfoil, the length of the troughs and ridges in the pressure surface is not critical, other than to assure that the troughs flow full. Fig. 3 is a cross section taken through the wing 30 along the bottom of a trough 32. The outline of the nominal airfoil cross-section is superimposed over cross section as a phantom line 46. As can be seen in Fig. 3, the trough depth increases from zero at its upstream end 48 to a maximum depth at the trailing edge 39 of the airfoil. Since the thickness of the nominal airfoil cross section decreases toward the trailing edge, the trough surface eventually falls below the location of the nominal pressure surface of the airfoil, such as at 50. A further extension of the trough downstream of the point 50 necessarily requires the formation of one of the ridges 40 in the lower pressure surface of the airfoil. Similarly, each ridge 34 is disposed above the upper suction surface of the nominal airfoil shape 46. In order that the airfoil trailing edge 39 remains thin, a corresponding trough 38 must be formed in the lower pressure surface of the airfoil. The trailing edge 39 of the airfoil therefore takes on a wave shape. From Figs. 3 and 4 it is seen that, in this embodiment, the airfoil thickness decreases toward the trailing edge over the length of the troughs and ridges; and the peaks of the ridges in both the suction and pressure surface follow the nominal airfoil cross-sectional shape almost to the trailing edge.

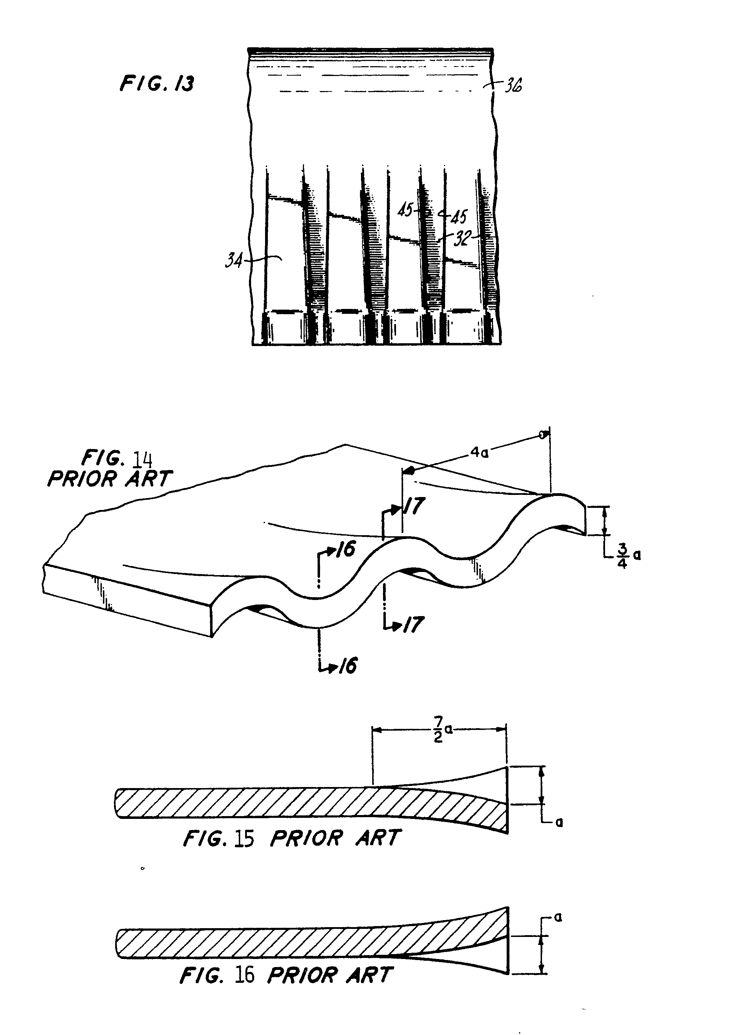

As shown in Fig. 13, the sidewalls 45 of the troughs in the suction surface decrease toward the trailing edge to create convergent passages. The convergent passages have an accelerating effect on the flow within the troughs. The acceleration of the bulk fluid flow within converging troughs is believed to add momentum to the boundary layer, although the advantages would be only secondary to those provided by the existence of the troughs and ridges themselves. Also, converging troughs in the suction surface decrease the suction surface pressures, may tend to increase lift. In view of these benefits, converging suction surface troughs are preferred, but not required.

Since the troughs and ridges in both the pressure and suction surfaces virtually meet near the trailing edge to form the wave-like shape of the trailing edge, it follows that the converging troughs in the suction surface will necessarily result in diverging trough portions in the pressure surface, thereby increasing pressure. The increased pressure may also increase lift.

In this embodiment the troughs and ridges are U-shaped at any cross section taken perpendicular to their length, and they blend with each other (i.e. no sharp edges) so that the airfoil surface is a series of relatively smooth undulations which minimize the formation of drag producing axial vortices. The shape and contour of the ridges and troughs along their length are selected to assure that two-dimensional boundary layer separation does not occur anywhere on the surface, such that the troughs flow full along their entire length. For the same reason the rate of increase in trough depth and the rate of increase in ridge height cannot be excessive. Optimizing the size and shape of the troughs and ridges may have to be done by trial and error, and will depend, for example, on the desired operating angle of attack and the nominal airfoil cross-sectional shape. In some cases amplitude M (Fig. 5a) at the trailing edge of only about twice the 99% boundary layer thickness (measured immediately upstream of the upstream ends of the troughs) may be sufficient. Preferably M should be at least about four times the 99% boundary layer thickness. It is believed that best results will be obtained when the amplitude M at the trailing edge is at least the same as and most preferably about twice the maximum thickness T of the separation region which would have formed at the selected operating angle of attack for the same body having the nominal airfoil cross section over its entire length. An amplitude M which is too small may result in delaying the onset of separation, without preventing it completely. The present invention is intended to encompass any amplitude which provides beneficial results.

If W is the distance between the peaks of adjacent ridges at the trailing edge (i.e. the "wavelength" at the trailing edge), the ratio of W to M is no greater than about 4.0 and no less than about 0.5, in order to induce sufficient lateral pressure gradients without encountering significant viscous losses.

In cases where separation from the pressure side of the airfoil is not a problem, the troughs and ridges should be designed to best deal with the separation on the suction surface, with the shape and size of the pressure surface troughs and ridges being more or less dictated by what is needed in the suction surface. It may also be desirable, in certain circumstances, to have substantially identically shaped and sized ridges and troughs in both the upper and lower surface of the airfoil. Furthermore, there may be practical reasons, such as manufacturing considerations and structural requirements, that dictate the use of a size, shape and length of trough and ridge which is not optimum, but which is highly beneficial. In such instances the troughs may not flow full over their entire length, but will at least delay the onset of separation.

Wind tunnel tests were run on two airfoils, one being an NACA 65 series, 21% thick airfoil of standard shape, and the other being an identical airfoil modified in accordance with the teachings of the present invention. The modified airfoil had an appearance similar to that of the airfoil shown in Fig. 2. Both the modified and unmodified airfoil had a chord length of 76mm (3.0 inches) and a span or transverse length of 228mm (9.0 inches), and a trailing thickness of 0.76mm (0.03 inch). The troughs and ridges had their upstream ends located 45.2mm (1.78 inches) from the trailing edge, which was near the location of the thickest [16mm (0.63 inch)] area of the airfoil cross section. At the trailing edge the wavelength W was 15.84mm (0.624 inch); the trough width D (Fig. 5a) in the suction surface was 4.52mm (0.178 inch); the trough width E in the pressure surface was 9.8mm (0.386 inch); and the amplitude M was 7.92mm (0.312 inch). The suction surface troughs converged from a width of 7.16mm (0.282 inch) at their upstream ends, to 4.52mm (0.178 inch) at the trailing end. The pressure surface troughs diverged from 7.16mm (0.282 inch) to 9.8mm (0.386 inch).

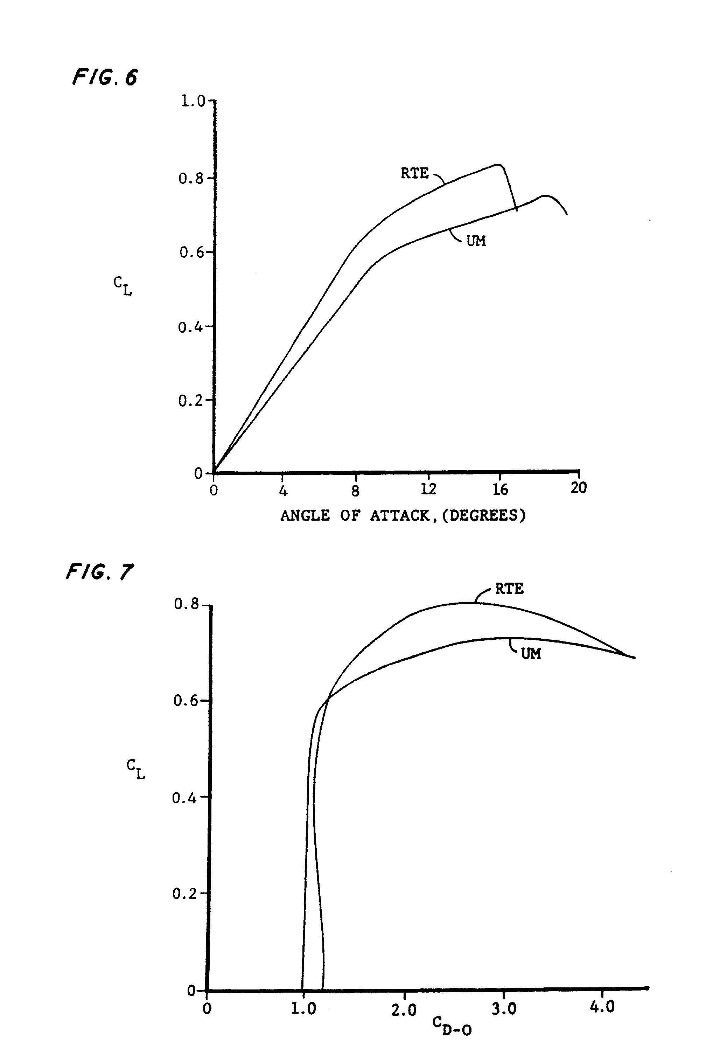

The lift curves for the test airfoils are shown in Fig. 6. The lift curves are plots of lift coefficients $C_L$ at various angles of attack "A". The curve for the unmodified airfoil is labelled UM. The curve for the airfoil modified in accordance with the present invention is labelled RTE, which stands for "Rippled Trailing Edge". It can be seen that greater lift occurred at all angles of attack for the RTE airfoil; and the RTE airfoil achieved about 15% greater lift before stall.

Fig. 7 shows the drag polar curves for these tests, which is a plot of lift coefficient $C_L$ vs. the drag coefficient normalized to the unmodified airfoil's zero lift drag ($C_{D-O}$ in the graph). Although there is slightly increased drag for low lift conditions, the RTE airfoil demonstrated considerably increased lift for fixed drag under high lift conditions.

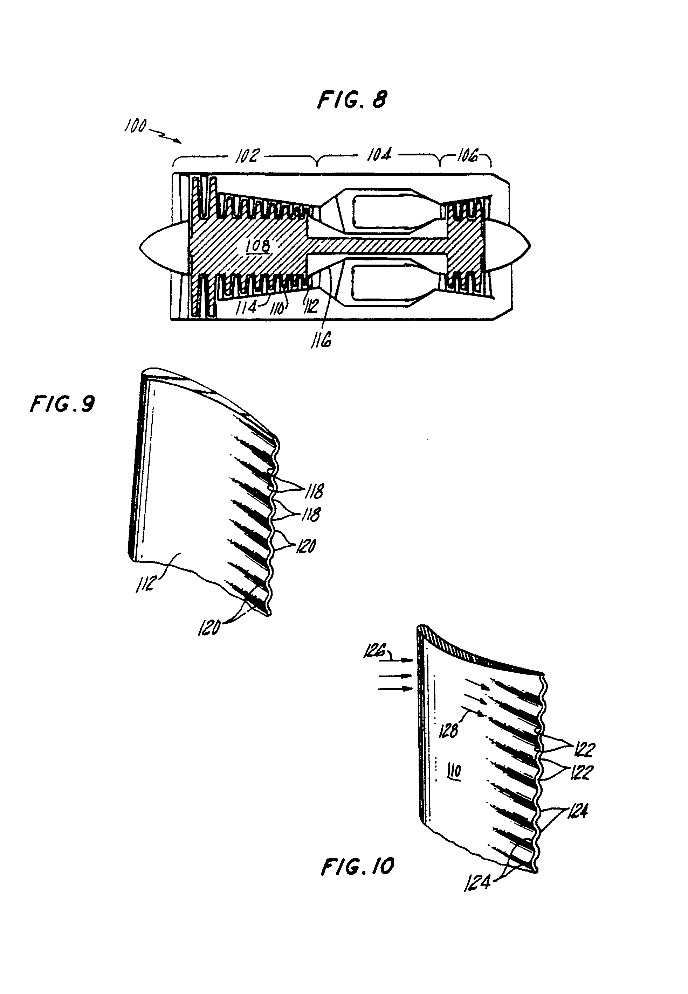

Figs. 8-12 show the application of the present invention to gas turbine engine airfoils. In Fig. 8, a gas turbine engine 100 is shown schematically as including, in series, a compressor section 102, a burner section 104, and a turbine section 106. The compressor section 102 includes a rotor stage 108 comprising a plurality of circumferentially spaced apart rotor blades 110. The rotor 108 is followed by a stage of stationary, circumferentially spaced apart stator vanes 112. The vanes 112 are attached at their inner ends to an inner engine casing 116, and at their outer ends to an outer engine casing 114.

Both the rotor blades and the stator vanes incorporate the rippled trailing edge, as more specifically shown in Figs. 9 and 10.

Referring to Fig. 9, both the pressure and suction surface of the vane 112 includes a plurality of alternating troughs 118 and ridges 120 extending over the trailing edge region, such that the stator vane has an appearance somewhat similar to the wing of Fig. 2. One point of distinction between the wing 30 and the vane 112 is that the pressure side of the vane is concave in the trailing edge region rather than convex. The teaching of the present invention is equally applicable to either type of airfoil section, and even to a flat surfaced airfoil having a thin trailing edge.

As best shown in Fig. 10, each rotor blade 110 also has a plurality of alternating troughs 122 and ridges 124 in both the pressure and suction surfaces of the blade to form a relatively thin, wave-shaped trailing edge. For illustration purposes, assume that the working fluid approaches the rotor blade 110 in the direction represented by the arrows 126. Blade rotation imparts a radial component to the air as it moves downstream over the surface of the blade. By the time the fluid reaches the trailing edge region it may be moving, (relative to the blade 110) in the direction of the arrows 128, which represent the direction of bulk fluid flow at the location of the arrows. It is preferred to orient the troughs and ridges generally parallel to such bulk fluid flow direction in the trailing edge region.

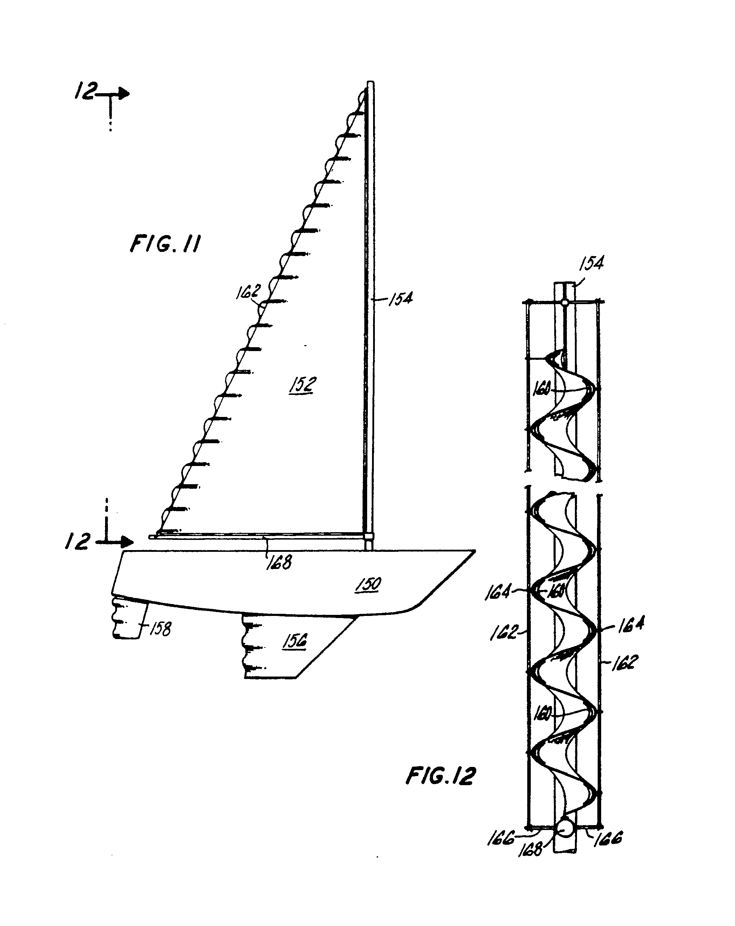

With reference to Fig. 11, a sailboat is shown incorporating the present invention in several different locations, all for the primary purpose of reducing drag resulting from boundary layer separation. The sailboat comprises a hull 150, a sail 152 attached to a mast 154, a keel 156 and a rudder 158. The sail, keel and rudder all incorporate the present invention. Thus, the rudder and keel have airfoil cross sections and have troughs and ridges formed in their thin trailing edge regions to delay boundary layer separation from the surfaces thereof as the boat travels through the water.

With reference to Fig. 12, the sail 152 has local, curved reinforcements 160 along the trailing edge to create a series of smooth curves in alternate directions along the trailing edge (i.e. a wave-shape). Ropes 162 pass through eyelets 164 at the ridge peaks created by the reinforcements along each side of the sail, and are connected to the top of the mast and to lateral extensions 166 of the boom 168. By forcing the trailing edge to take on a wave shape, a plurality of alternating troughs and ridges in both sides of the sail will be formed along a region of the sail immediately upstream of and including the trailing edge. It is expected that the ridges and troughs formed in the trailing edge region of the sail will at least partially alleviate trailing edge separation on the suction surface of the sail, and attendant drag.

## Claims

1. An airfoil shaped body having a thin trailing edge (39), a trailing edge region, and a pressure and a suction surface (42, 36) terminating at said trailing edge (39), and adapted to be disposed in a fluid moving downstream relative thereto at a selected operating angle of attack A which would normally result in flow separation from said suction surface (36), means for preventing or delaying such flow separation from occurring on said suction surface (36) at such selected angle of attack comprising a plurality of alternating, adjacent troughs and ridges (32, 34; 118, 120; 122, 124) in said suction surface (36) extending to said trailing edge (39) generally along streamlines of the bulk fluid flow adjacent to the suction surface (36), said troughs and ridges (32, 34, 118, 120, 122, 124) in said suction surface (36) forming, respectively, ridges and troughs in said pressure surface (42) at least in said trailing edge region and said trailing edge (39) being wave shaped, said troughs and ridges being generally "U"-shaped in cross section perpendicular to their length and blending smoothly with each other, the peak-to-peak wave amplitude M of said troughs and ridges increasing from zero at their upstream ends to maximum amplitude at the trailing edge (36), characterized in that said troughs and ridges (32, 34; 118, 120; 122, 124) initiate at a point upstream of any boundary layer separation and the troughs and ridges are contoured and sized along the length thereof such that streamwise two-dimensional boundary layer separation on the surface of the troughs and ridges is eliminated over substantially the full length of the troughs and ridges (32, 34; 118, 120; 122, 124) at said selected operating angle, that said maximum amplitude at said trailing edge (36) is at least about twice and preferably at least about four times the 99 % boundary layer thickness measured immediately upstream of said troughs, and that at the trailing edge the distance W between adjacent ridge peaks is between 0.5 and 4.0 times M.

2. An airfoil-shaped body according to claim 1, characterized in that said body is a gas turbine engine airfoil (110, 112), and said troughs and ridges (118, 120; 122, 124) are disposed only in said trailing edge region.

3. An airfoil-shaped body according to claim 2, characterized by said body being a compressor airfoil (110, 112).

4. An airfoil-shaped body according to claim 1, characterized in that said troughs and ridges (32,34,118,120, 122,124) form an ondulating, smooth suction surface.

5. An airfoil-shaped body according to claim 1, characterized in that the peak-to-peak wave amplitude M at said trailing edge (39) is at least what the thickness of the separation region would have been had separation occurred on the suction surface (36) about at the upstream ends of said troughs (32) at said operating angle of attack A.

6. An airfoil-shaped body according to claim 1, characterized in that the peak-to-peak wave amplitude M at said trailing edge (39) is about twice what the thickness of the separation region would have been had separation occurred on the suction surface (36) at about the upstream ends of said trough (32) at said operating angle of attack A.

7. An airfoil-shaped body according to claim 1, characterized in that said body is a stator vane (112) within rotating machinery.

8. An airfoil-shaped body according to claim 1, characterized in that said body is a rotor blade (110) within rotating machinery.

9. An airfoil-shaped body according to claim 1, characterized in that said body is a sail (152) for a sailing vessel.

10. An airfoil-shaped body according to claim 1, characterized in that said troughs (32) in said suction surface (36) each include sidewalls (45) which converge as they approach the trailing edge (39) to accelerate the flow therein.

11. An airfoil-shaped body according to claim 1, characterized in that the thickness of said body decreases towards said trailing edge (39) along the length of said troughs (32) and ridges (34).

12. An airfoil-shaped body according to claim 1, characterized in that each trough (32) includes a pair of sidewalls (45), and wherein said sidewalls (45) of each trough are substantially parallel to each other.

13. An airfoil-shaped body according to claim 1, characterized in that said body is an airfoil (112) disposed within a conduit having wall means (112,116) defining a fluid flow passage, said airfoil (112) having opposite ends both of which are adjacent to or secured to said wall means (112,116).

**Revendications**

1. Corps à profil aérodynamique ayant un bord de fuite mince (39), une région de bord de fuite, et des extrados et des intrados (42, 36) se terminant au niveau dudit bord de fuite (39), et prévu pour être disposé dans un fluide se déplaçant en aval par rapport à celui-ci à un angle d'attaque de fonctionnement sélectionné A qui normalement aurait pour résultat une séparation de l'écoulement depuis ledit extrados (36), un moyen pour empêcher ou retarder une telle séparation d'écoulement de se produire sur ledit extrados (36) à cet angle d,attaque sélectionné comprenant une pluralité de creux et arêtes adjacents en alternance (32, 34 ; 118, 120 ; 122, 124) dans ledit extrados (36) s'étendant vers ledit bord de fuite (39) généralement suivant les écoulements aérodynamiques de l'écoulement de fluide global adjacent à l'extrados (36), lesdits creux et arêtes (32, 34, 118, 120, 122, 124) dans ledit extrados (36) formant, respectivement, des arêtes et des creux dans ledit intrados (42) au moins dans ladite région de bord de fuite et ledit bord de fuite (39) étant en forme d'onde, lesdits creux et arêtes étant généralement en forme de U en section transversale perpendiculaires à leurs longueurs et se mêlant régulièrement l'un avec l'autre, l'amplitude d'onde crête à crête M desdits creux et arêtes augmentant de zéro à leurs extrémités en amont à l'amplitude maximale au niveau du bord de fuite (36), caractérisé en ce que lesdits creux et arêtes (32, 34 ; 118, 120 ; 122, 124) commencent en un point en amont de toute séparation de couches limites et que les creux et arêtes sont profilés et dimensionnés le long de leur longueur de sorte que la séparation de couches limites bidimensionnelles de l'écoulement aérodynamique sur la surface des creux et arêtes est éliminée sur pratiquement la longueur totale des creux et arêtes (32, 34 ; 118, 120 ; 122, 124) audit angle de fonctionnement sélectionné, en ce que ladite amplitude maximale au niveau dudit bord de fuite (36) est d'au moins environ deux fois et de préférence d'au moins environ quatre fois les 99 % de l'épaisseur de la couche limite mesurée immédiatement en amont desdits creux, et en ce que au niveau du bord de fuite, la distance W entre des crêtes d'arêtes adjacentes est entre 0,5 et 4 fois M.

2. Corps à profil aérodynamique selon la revendication 1, caractérisé en ce que ledit corps est un profil aérodynamique de turbomoteur (110, 112), et que lesdits creux et arêtes (118, 120 ; 122, 124) sont disposés seulement dans ladite région de bord de fuite.

3. Corps à profil aérodynamique selon la revendication 2, caractérisé en ce que ledit corps est un profil aérodynamique de compresseur (110, 112).

4. Corps à profil aérodynamique selon la revendication 1, caractérisé en ce que lesdits creux et arêtes (32, 34, 118, 120, 122, 124) forment un extrados lisse non-ondulé.

5. Corps à profil aérodynamique selon la revendication 1, caractérisé en ce que l'amplitude de l'onde crête à crête M au niveau dudit bord de fuite (39) est au moins celle de l'épaisseur de la région de séparation qui se serait produite sur l'extrados (36) autour des extrémités en amont desdits creux (32) audit angle d'attaque de fonctionnement A.

6. Corps à profil aérodynamique selon la revendication 1, caractérisé en ce que l'amplitude de l'onde crête à crête M au niveau dudit bord de fuite (39) est d'environ deux fois celle de l'épaisseur de la région de séparation qui se serait produite sur l'extrados (36) à environ les extrémités en amont dudit creux (32) audit angle d'attaque de fonctionnement A.

7. Corps à profil aérodynamique selon la revendication 1, caractérisé en ce que ledit corps est une aube de stator (112) à l'intérieur d'une machine tournante.

8. Corps à profil aérodynamique selon la revendication 1, caractérisé en ce que ledit corps est une aube de rotor (110) à l'intérieur d'une machine tournante.

9. Corps à profil aérodynamique selon la revendication 1, caractérisé en ce que ledit corps est une voile (152) pour un voilier.

10. Corps à profil aérodynamique selon la revendication 1, caractérisé en ce que lesdits creux (32) dans ledit extrados (36) comportent chacun des parois latérales (45) qui convergent à mesure qu'ils approchent du bord de fuite (39) afin d'accélérer l'écoulement dans ceux-ci.

11. Corps à profil aérodynamique selon la revendication 1, caractérisé en ce que l'épaisseur dudit corps diminue vers ledit bord de fuite (39) suivant la longueur desdits creux (32) et arêtes (34).

12. Corps à profil aérodynamique selon la revendication 1, caractérisé en ce que chaque creux (32) comporte une paire de parois latérales (45), et dans lequel lesdites parois latérales (45) de chaque creux sont pratiquement parallèles l'une à l'autre.

13. Corps à profil aérodynamique selon la revendication 1, caractérisé en ce que ledit corps est un profil aérodynamique (112) disposé à l'intérieur d'une conduite ayant un moyen de paroi (112, 116) définissant un passage d'écoulement de fluide, ledit profil aérodynamique (112) ayant des extrémités opposées dont deux sont adjacentes à, ou fixées, audit moyen de paroi (112, 116).

## Patentansprüche

1. Tragflügelförmiger Körper mit einer dünnen Hinterkante (39), einem Hinterkantengebiet und einer Druck- sowie einer Saugfläche (42, 36), die an der Hinterkante (39) endigen, der zur Anordnung in einem Fluid vorgesehen ist, welches sich relativ zu ihm unter einem ausgewählten Betriebsanstellwinkel A stromabwärts bewegt, was normalerweise zu einer Strömungsablösung von der Saugfläche (36) führen würde, einer Einrichtung zum Verhindern oder Verzögern des Auftretens dieser Strömungsablösung an der Saugfläche (36) bei diesem ausgewählten Anstellwinkel, die mehrere abwechselnde, benachbarte talartige Vertiefungen und bergrückenartige Erhebungen (32, 34; 118, 120; 122, 124) in der Saugfläche (36) aufweist, welche sich zu der Hinterkante (39) insgesamt längs Stromlinien der Fluidmassenströmung an der Saugfläche (36) erstrecken, wobei die Vertiefungen und Erhebungen (32, 34, 118, 120, 122, 124) in der Saugfläche (36) Erhebungen bzw. Vertiefungen in der Druckfläche (42) wenigstens in dem Hinterkantengebiet bilden und die Hinterkante (39) wellenförmig ist, wobei die Vertiefungen und Erhebungen im Querschnitt rechtwinkelig zu ihrer Länge insgesamt U-förmig sind und stetig ineinander übergehen und wobei die Scheitel-Scheitel-Wellenamplitude M der Vertiefungen und Erhebungen von null an ihren stromaufwärtigen Enden bis zur maximalen Amplitude an der Hinterkante (36) zunimmt, dadurch gekennzeichnet, daß die Vertiefungen und Erhebungen (32, 34; 118, 120; 122, 124) an einem Punkt stromaufwärts irgendeiner Grenzschichtablösung beginnen und die Vertiefungen und Erhebungen über ihrer Länge so konturiert und bemessen sind, daß eine zweidimensionale Grenzschichtablösung in Strömungsrichtung an der Oberfläche der Vertiefungen und Erhebungen auf im wesentlichen der vollen Länge der Vertiefungen und Erhebungen (32, 34; 118, 120; 122, 124) bei dem ausgewählten Betriebswinkel eliminiert ist, daß die maximale Amplitude an der Hinterkante (36) wenigstens etwa das Doppelte und vorzugsweise wenigstens etwa das Vierfache der 99%-Grenzschichtdicke, gemessen unmittelbar stromaufwärts der Vertiefungen, ist und daß an der Hinterkante der Abstand W zwischen benachbarten Erhebungsscheiteln zwischen dem 0,5- und dem 4,0-fachen von M liegt.

2. Tragflügelförmiger Körper nach Anspruch 1, dadurch gekennzeichnet, daß der Körper eine Gasturbinentriebwerksschaufel (110, 112) ist und daß die Vertiefungen und Erhebungen (118, 120; 122, 124) nur in dem Hinterkantengebiet angeordnet sind.

3. Tragflügelförmiger Körper nach Anspruch 2, dadurch gekennzeichnet, daß der Körper eine Verdichterschaufel (110, 112) ist.

4. Tragflügelförmiger Körper nach Anspruch 1, dadurch gekennzeichnet, daß die Vertiefungen und Erhebungen (32, 34; 118, 120; 122, 124) eine sich wellende, stetige Saugfläche bilden.

5. Tragflügelförmiger Körper nach Anspruch 1, dadurch gekennzeichnet, daß die Scheitel-Scheitel-Wellenamplitude M an der Hinterkante (39) wenigstens das ist, was die Dicke des Ablösungsgebietes gewesen wäre, wenn die Ablösung an der Saugfläche (36) etwa an den stromaufwärtigen Enden der Vertiefungen (32) bei dem Betriebsanstellwinkel (A) erfolgt wäre.

6. Tragflügelförmiger Körper nach Anspruch 1, dadurch gekennzeichnet, daß die Scheitel-Scheitel-Wellenamplitude M an der Hinterkante (39) etwa doppelt so groß wie die Dicke ist, die das Ablösungsgebiet gehabt hätte, wenn die Ablösung an der Saugfläche (36) etwa an den stromaufwärtigen Enden der Vertiefung (32) bei dem Betriebsanstellwinkel A erfolgt wäre.

7. Tragflügelförmiger Körper nach Anspruch 1, dadurch gekennzeichnet, daß der Körper eine Leitschaufel (112) innerhalb einer umlaufenden Maschine ist.

8. Tragflügelförmiger Körper nach Anspruch 1, dadurch gekennzeichnet, daß der Körper eine Laufschaufel (110) innerhalb einer umlaufenden Maschine ist.

9. Tragflügelförmiger Körper nach Anspruch 1, dadurch gekennzeichnet, daß der Körper ein Segel (152) für ein Segelschiff ist.

10. Tragflügelförmiger Körper nach Anspruch 1, dadurch gekennzeichnet, daß die Vertiefungen (32) in der Saugfläche (36) jeweils Seitenwände (45) aufweisen, die konvergieren, wenn sie sich der Hinterkante (39) nähern, um die Strömung darin zu beschleunigen.

11. Tragflügelförmiger Körper nach Anspruch 1, dadurch gekennzeichnet, daß die Dicke des Körpers zu der Hinterkante (39) hin über der Länge der Vertiefungen (32) und Erhebungen (34) abnimmt.

12. Tragflügelförmiger Körper nach Anspruch 1, dadurch gekennzeichnet, daß jede Vertiefung (32) zwei Seitenwände (45) aufweist und daß die Seitenwände (45) jeder Vertiefung im wesentlichen parallel zueinander sind.

13. Tragflügelförmiger Körper nach Anspruch 1, dadurch gekennzeichnet, daß der Körper eine Schaufel (112) ist, die innerhalb eines Kanals angeordnet ist, der eine Wandeinrichtung (112, 116) hat, die einen Fluidströmungsdurchlaß begrenzt, wobei die Schaufel (112) entgegengesetzte Enden hat, die beide der Wandeinrichtung (112, 116) benachbart oder an derselben befestigt sind.

FIG.1 PRIOR ART

FIG. 2

FIG. 2A

FIG. 3

FIG. 4

FIG. 5A

FIG. 5B

**FIG. 6**

**FIG. 7**

## FIG. 8

## FIG.9

## FIG. 10

FIG.11

162
154
152
12
168
150
158
156

154
160
164
162
164
162
160
166
168
166

FIG.12

FIG. 13

FIG. 14
PRIOR ART

FIG. 15 PRIOR ART

FIG. 16 PRIOR ART